# DEMANDE DE BREVET EUROPEEN

(11) **EP 1 935 761 A1**
(43) Date de publication de la demande: **25.06.2008**
(21) Numéro de dépôt: 07301444.1
(22) Date de dépôt: 10.10.2007
(51) Int. Cl.: B62D 25/16, B60R 13/08

(54) **Aile de véhicule automobile comprenant des moyens d'amortissement des bruits.**

(30) Priorité: 21.12.2006 FR 0655832
(71) Demandeur: Peugeot Citroen Automobiles SA, 78943 Vélizy-Villacoublay Cedex (FR)
(72) Inventeur: Rigoulet, Sébastien, 90800, BAVILLIERS (FR); Leherissier, Anne Sophie, 90500, BEAUCOURT (FR)

(57) **Abrégé**

La présente invention concerne une aile (100) de véhicule, telle qu'une aile avant, dont un bord (120) présente un profil circulaire destiné à épouser celui d'une roue du véhicule et comprenant une peau (102) qui s'étend selon un axe longitudinal (x), au moins une joue (104) solidaire de la peau (102) et qui s'étend selon un axe (y) sensiblement perpendiculaire à la peau (102) et des moyens (200) pour amortir les bruits qui se propagent, à l'arrêt ou lors du roulage du véhicule, entre l'aile (100) et la partie de carrosserie sur laquelle elle est destinée à être fixée.

L'aile (100) est caractérisée en ce que lesdits moyens d'amortissement des bruits (200) sont constitués d'un corps (202) rigide, de moyens de pré-maintien (210, 214) prévus pour pré-maintenir le corps (202) sur la joue (104) et de moyens de fixation (206) prévus pour fixer l'aile (100) sur ladite partie de carrosserie.

L'invention trouve application dans le domaine de l'automobile.

## Description

La présente invention concerne une aile de véhicule automobile comprenant des moyens d'amortissement des bruits.

Elle se rapporte plus particulièrement à une aile avant de véhicule, dont un bord présente un profil circulaire destiné à épouser celui d'une roue du véhicule et comprenant une peau qui s'étend selon un axe longitudinal (x), au moins une joue solidaire de la peau et qui s'étend selon un axe (y) sensiblement perpendiculaire à la peau et des moyens pour amortir les bruits qui se propagent, à l'arrêt ou lors du roulage du véhicule, entre l'aile et la partie de carrosserie sur laquelle elle est destinée à être fixée.

De nombreux développements récents dans l'automobile ont pour but de réduire considérablement le niveau sonore dans l'habitacle des véhicules et ce, dans un souci de confort amélioré pour le conducteur et ses passagers.

Des moyens d'amortissement des bruits de l'état de la technique sont représentés sur la figure 10. Ces moyens consistent en un bloc de mousse 10 qui est collé à la fois sur l'aile et sur la carrosserie du véhicule. Le collage du bloc de mousse 10 est souvent aléatoire ce qui entraîne une mauvaise isolation acoustique de l'habitacle. En outre, le collage du bloc de mousse 1 ne permet pas un démontage de l'aile sans destruction du bloc de mousse 1.

L'invention a pour but de remédier aux inconvénients mentionnés ci-dessus en proposant une aile de véhicule comprenant des moyens d'amortissement des bruits garantissant une parfaite isolation acoustique.

A cet effet, la présente invention concerne une aile de véhicule, telle qu'une aile avant, dont un bord présente un profil circulaire destiné à épouser celui d'une roue du véhicule et comprenant une peau qui s'étend selon un axe longitudinal (x), au moins une joue solidaire de la peau et qui s'étend selon un axe (y) sensiblement perpendiculaire à la peau et des moyens pour amortir les bruits qui se propagent, à l'arrêt ou lors du roulage du véhicule, entre l'aile et la partie de carrosserie sur laquelle elle est destinée à être fixée, caractérisée en ce que lesdits moyens d'amortissement des bruits sont constitués d'un corps rigide, de moyens de pré-maintien prévus pour pré-maintenir le corps sur la joue et de moyens de fixation prévus pour fixer l'aile sur ladite partie de carrosserie.

Avantageusement, les moyens de pré-maintien et les moyens de fixation sont amovibles.

Selon un mode de réalisation particulier, de l'invention, les moyens de maintien sont des clips qui s'emmanchent dans des orifices de clippage de la joue et/ou des pinces qui serrent la tranche de la joue.

Avantageusement, les moyens de fixation sont des écrous-pince et/ou des boulons.

Avantageusement, la périphérie du corps est recouverte d'un joint souple.

L'invention concerne également un véhicule automobile comprenant une partie de carrosserie, au moins une aile telle que décrite précédemment, caractérisé en ce que, lors de la fixation des moyens de fixation sur la partie de carrosserie, la joue est fixée par serrage entre le corps et la partie de carrosserie.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :

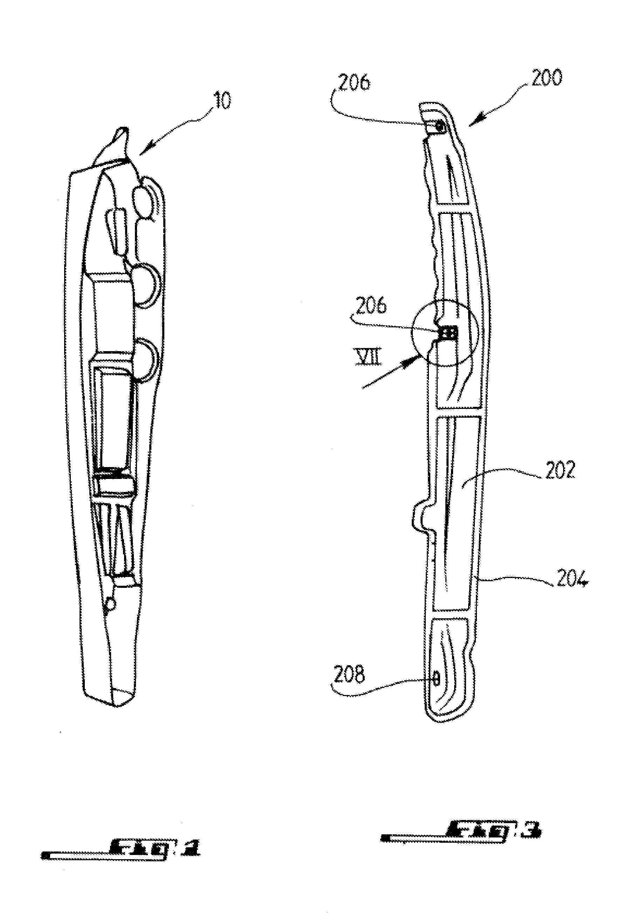

- la figure 1 est une vue en perspective des moyens d'amortissement des bruits de l'art antérieur,
- la figure 2 est une vue en perspective d'une aile avant de véhicule automobile selon l'invention,
- la figure 3 est une vue en perspective des moyens d'amortissement des bruits selon l'invention,
- la figure 4 est une vue partielle d'un véhicule automobile comprenant une aile selon l'invention,
- la figure 5 est une vue agrandie de la partie cerclée en V de la figure 2,
- la figure 6 est un vue agrandie de la partie cerclée en VI de la figure 2, et
- la figure 7 est un vue agrandie de la partie cerclée en VII de la figure 3.

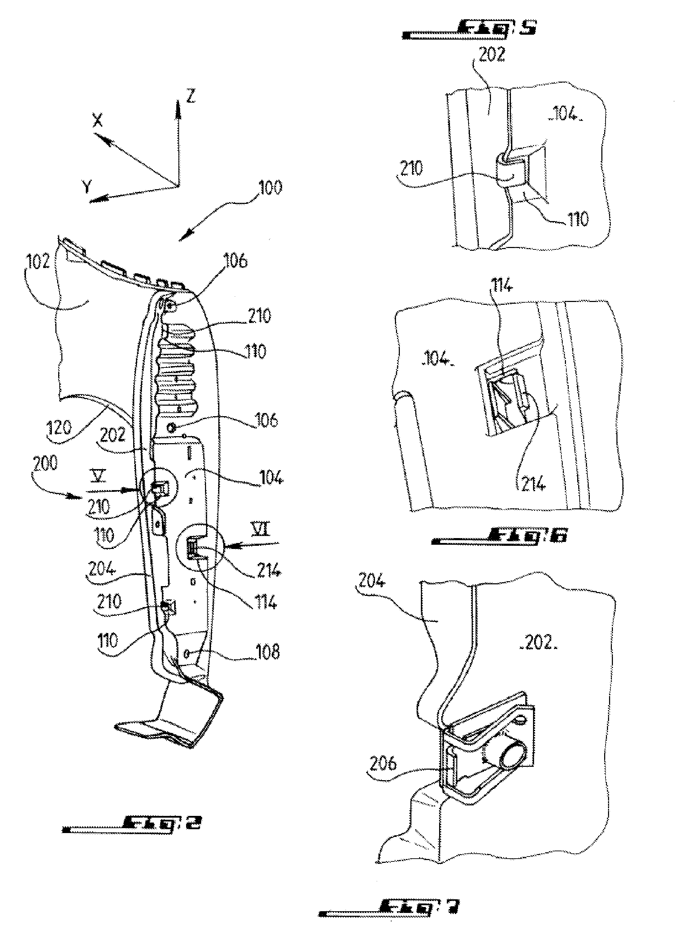

Une aile avant droite 100 d'un véhicule automobile est représentée sur la figure 2.

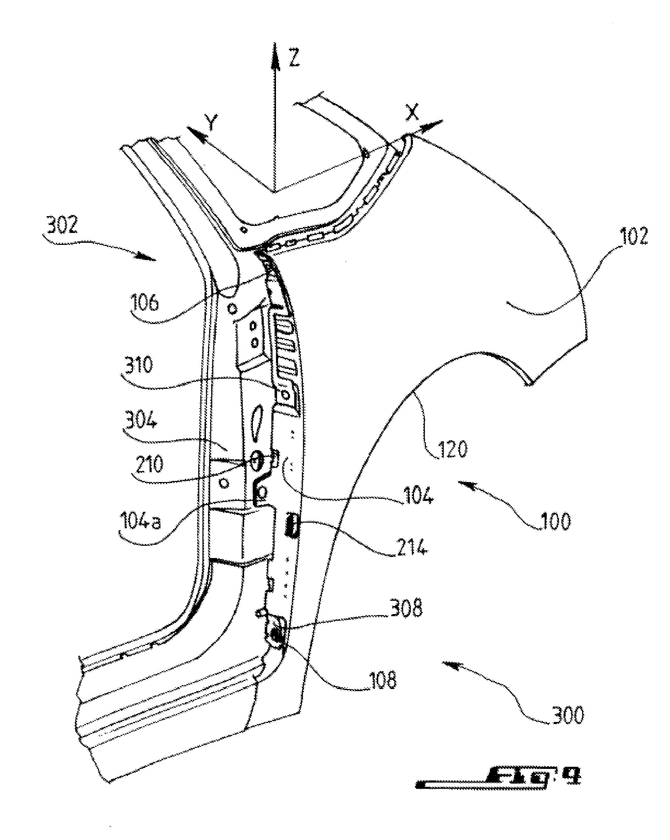

La partie avant droite du véhicule 300 est représentée sur la figure 4. L'aile 100 présente un bord supérieur dont le profil est destiné à épouser celui du capot du véhicule 300, un bord avant droit au profil conjugué de celui d'un phare avant droit du véhicule 300, un bord inférieur 120 au profil circulaire destiné à épouser celui de la roue avant droite du véhicule 300 et une partie arrière droite 104. L'aile 100 est prévue pour venir se fixer sur la partie latérale avant droite 302 de la carrosserie. A cet effet, la partie latérale 302 comprend un montant 304 et des équerres 308 et 310 fixées au montant 304.

L'aile avant droite 100 se présente sous la forme d'une peau 102 et d'une joue 104 qui lui est solidaire et sensiblement perpendiculaire. La peau 102 s'étend selon un axe longitudinal x sensiblement confondu avec l'axe longitudinal du véhicule 300. La joue 104 qui forme la partie arrière de l'aile 100 s'étend selon un axe y sensiblement perpendiculaire à l'axe x.

Dans le volume défini par la peau 102, la joue 104 et la partie latérale 302, sont disposés des moyens 200 pour amortir les bruits qui se propagent, à l'arrêt ou lors du roulage du véhicule, entre l'aile 100 et la partie de carrosserie 302, 308, 310 sur laquelle elle est destinée à être fixée.

Les moyens d'amortissement des bruits 200 sont représentés sur la figure 2 et sont constitués d'un corps 202 rigide qui s'applique contre la surface de la joue 104 et dont le contour est conformé pour épouser la section perpendiculaire à l'axe x du volume défini ci-dessus.

Afin de garantir le bon positionnement du corps 202 sur la joue 104, les moyens d'amortissement 200 comprennent des moyens de pré-maintien 210 et 214 qui sont prévus pour pré-maintenir le corps 202 sur la joue 104 avant l'assemblage final de l'aile 100 sur la carrosserie.

A cette fin, les moyens d'amortissement 200 comprennent également des moyens de fixation 206 qui sont prévus pour fixer l'aile 100 sur la carrosserie.

La rigidité du corps 202 permet de fixer l'aile 100 sur la carrosserie 302 au travers des moyens de fixation 206 et empêche la déformation du corps 202 lors de l'assemblage final.

Les moyens de pré-maintien 210 et 214 positionnent et pré-maintiennent les moyens d'amortissement 200 sur la joue 104 afin de garantir leur bon positionnement avant la fixation de l'aile 100 sur la carrosserie 302. La peau 102, la joue 104 et les moyens d'amortissement 200 forment un ensemble qui peut être facilement manipulé au montage comme au démontage.

En particulier, les moyens de pré-maintien 210 et 214 et les moyens de fixation 206 sont amovibles afin de permettre un démontage aisé et un remplacement des différents éléments en cas de nécessité.

Deux exemples de moyens de pré-maintien sont représentés sur la figure 5 et sur la figure 6. Les moyens de pré-maintien peuvent être des pinces 210, par exemple au nombre de trois, qui enserrent la tranche de la joue 104 au niveau de parties spécialement embouties 110 de la joue 104 et qui peuvent être disposés en parties supérieure, médiane et inférieure de la joue 104. La mise en place des pinces 210 s'effectue par une translation parallèlement à l'axe y. Les moyens de pré-maintien peuvent être des clips 214 qui s'emmanchent selon la direction x dans des orifices de clippage 114 de la joue 104.

Avantageusement, le clip 214 forme une butée qui empêche tout déplacement selon les directions x, y et z et les pinces 210 forment des butées qui empêchent tout déplacement selon la direction x. Les moyens de pré-maintien sont répartis de manière à assurer un bon maintien des moyens d'amortissement 200 sur la joue 104.

Un exemple de moyens de fixation 206 est représenté sur la figure 7. Ces moyens de fixation 206 se présentent sous la forme d'écrous-pince 206 en partie haute et en partie médiane du corps 202. En partie basse, les moyens de fixation 206 prennent la forme de boulons. Chaque écrou-pince 206 comprend une pince qui s'emmanche sur la tranche du corps 202 et un écrou prévu pour coopérer avec une vis.

Lors de la fixation des moyens de fixation 206 sur la partie de carrosserie 308, 310 prévue à cet effet, la peau 102 est fixée par serrage entre le corps 202 et la partie de carrosserie 308, 310 correspondante. Pour chaque écrou-pince 206, une vis traverse l'équerre 310 correspondante, puis la joue 104 au niveau d'un trou 106 prévu à cet effet, et vient se visser dans l'écrou-pince 206 considéré. De la même manière, en ce qui concerne le boulon de la partie basse, la vis traverse l'équerre 308 correspondante, puis la joue 104 au niveau d'un trou 108 prévu à cet effet, puis le corps 202 au niveau d'un trou 208 prévu à cet effet, et vient se visser dans un écrou rapporté.

La joue 104 est ainsi prise en sandwich entre les équerres 308, 310 et le corps 202 et maintenue par serrage des vis et des écrous.

La joue 104 peut comporter une patte 104a de fixation à la carrosserie à l'aide d'une vis de fixation.

Afin de parfaire l'isolation acoustique autour du corps 202 et d'absorber les variations dimensionnelles dues aux tolérances de fabrications, la périphérie de ce dernier est recouverte d'un joint souple 204 par exemple en un matériau mousse.

## Revendications

1. Aile (100) de véhicule, telle qu'une aile avant, dont un bord (120) présente un profil circulaire destiné à épouser celui d'une roue du véhicule et comprenant une peau (102) qui s'étend selon un axe longitudinal (x), au moins une joue (104) solidaire de la peau (102) et qui s'étend selon un axe (y) sensiblement perpendiculaire à la peau (102) et des moyens (200) pour amortir les bruits qui se propagent, à l'arrêt ou lors du roulage du véhicule, entre l'aile (100) et la partie de carrosserie (308, 310) sur laquelle elle est destinée à être fixée, **caractérisée en ce que** lesdits moyens d'amortissement des bruits (200) sont constitués d'un corps (202) rigide, de moyens de pré-maintien (210, 214) prévus pour pré-maintenir le corps (202) sur la joue (104) et de moyens de fixation (206) prévus pour fixer le corps (202) sur ladite partie de carrosserie (308, 310).

2. Aile (100) selon la revendication 1, **caractérisée en ce que** les moyens de pré-maintien (210, 214) et les moyens de fixation (206) sont amovibles.

3. Aile (100) selon l'une des revendications 1 ou 2, **caractérisée en ce que** les moyens de maintien sont des clips (214) qui s'emmanchent dans des orifices de clippage (114) de la joue (104) et/ou des pinces (210) qui enserrent la tranche de la joue (104).

4. Aile (100) selon l'une des revendications 1 à 3, **caractérisée en ce que** les moyens de fixation (206) sont des écrous-pince (206) et/ou des boulons.

5. Aile (100) selon l'une des revendications 1 à 4, **caractérisée en ce que** la périphérie du corps (202) est recouverte d'un joint souple (204).

6. Véhicule automobile (300) comprenant une partie de carrosserie (308, 310), au moins une aile (100) selon l'une des revendications précédentes, **caractérisée en ce que**, lors de la fixation des moyens de fixation (206) sur ladite partie de carrosserie (308, 310), la joue (104) est fixée par serrage entre le corps (202) et ladite partie de carrosserie (308, 310).
